# FASCICULE DE BREVET EUROPEEN

(11) **EP 0 712 677 B1**
(45) Date de publication et mention de la délivrance du brevet: **22.12.1999**
(21) Numéro de dépôt: 95118052.0
(22) Date de dépôt: 16.11.1995
(51) Int. Cl.: B23D 57/00, B23Q 11/12

(54) **Dispositif de sciage par fil intégré dans un bâti monobloc**
Drahtsägevorrichtung mit Monoblockmaschinengestell
Wire sawing device with monobloc frame

(30) Priorité: 18.11.1994 CH 347494
(43) Date de publication de la demande: 22.05.1996
(73) Titulaire: HCT Shaping Systems SA, 1033 Cheseaux (CH)
(72) Inventeur: Hauser, Charles, Genolier (CH)
(74) Mandataire: Micheli & Cie

(56) Documents cités:
- EP-A- 0 552 663
- WO-A-90/05053
- WO-A-91/12915
- US-A- 4 157 802
- PATENT ABSTRACTS OF JAPAN vol. 17, no. 664 (M-1523), 8 Décembre 1993 & JP-A-05 220732 (SUMITOMO METAL IND LTD), 31 Août 1993,

## Description

La présente invention se rapporte à un dispositif de sciage par fil comprenant notamment une nappe de fils susceptible de se déplacer selon un mouvement continu ou alternatif en appui contre une pièce à scier fixée sur une table-support; voir par exemple EP-A 0 552 663.

On connaît déjà des dispositifs de sciage du type précité, dans lesquels la zone de sciage est constituée par un ensemble de cylindres parallèles les uns aux autres; ces cylindres, appelés guide-fils, sont gravés avec des gorges définissant l'intervalle entre les fils de la nappe, soit l'épaisseur des pièces à scier. La pièce à scier est fixée sur une table-support qui se déplace perpendiculairement à la nappe de fils. La vitesse de déplacement définit la vitesse de coupe. Le renouvellement du fils ainsi que le contrôle de sa tension se fait dans une partie appelée "zone de gestion du fil" et située en dehors de la zone de sciage proprement dite. L'agent qui régira la découpe est soit un abrasif fixé sur le fil, soit un abrasif libre amené sous forme de barbotine, le fil n'agissant que comme transporteur.

Lors de la rotation d'un élément mécanique, on sait que la température de travail dudit élément peut ne pas être constante, mais varier au cours du temps suivant le travail demandé et en raison de frottements et de chaleur générés dans les paliers ou les pièces environnantes. Si la position de cet élément est critique vis-à-vis du travail demandé, non seulement la température propre de l'élément sera importante, mais les variations de l'environnement joueront également un rôle sur sa position spatiale. Ces variations de température provoquent donc des dilatations thermiques qui, dans certains cas, peuvent influencer le résultat des opérations à effectuer. Il s'avérera alors nécessaire de compenser cette dilatation par un contrôle de sa position ou de construire l'ensemble de telle manière que les effets ne se reportent pas sur la pièce à scier.

Toutefois, en raison de la complexité du système environnant, un strict contrôle de la température de l'élément critique peut ne pas être suffisant. Une construction des parties critiques faite de telle manière que les mouvements élastiques ou les mouvements dus à des déformations thermiques sont dans des plans qui ne perturbent pas la géométrie des pièces à scier peut s'avérer indispensable. Une telle construction peut alors éviter un système de contrôle dont la mise en oeuvre peut s'avérer onéreuse, complexe voire impossible. Ce type de construction est d'autant plus nécessaire que la précision demandée du positionnement est grande ou que la dimension de l'élément à scier est importante. Ce type de construction apporte d'autant plus dans ces effets que le matériau choisi pour sa construction est un matériau dont le coefficient de dilatation thermique est faible, par exemple de l'Invar^{R} (K<1*10-6).

Des dispositifs de contrôle de température sont également déjà connus spécialement dans l'usinage de pièces de haute précision ou de positionnement en robotique où l'on utilise soit une douche, soit une circulation interne. Toutefois, ceux-ci font appel à des systèmes de refroidissement basés sur un contrôle de la température du fluide ou de l'environnement qui ne requiert une stabilité que durant une période relativement courte. La géométrie de la construction n'est pas un facteur important de la précision, du moins en ce qui concerne les mouvements dus à des phénomènes thermiques. Or, le sciage de tranches fines peut durer plusieurs heures voire plusieurs jours suivant la dureté du matériau. Des dispositifs de sciage par fil du type précité sont déjà utilisés, spécialement dans l'industrie des composants électroniques, des ferrites, des quartz et silices, pour l'obtention en tranches fines de matériaux tels que le silicium poly-ou monocristallin ou les nouveaux matériaux comme GaAs, InP, GGG, ou également le quartz, le saphir synthétique, voire la céramique. Le prix élevé de ces matériaux rend le sciage par fil plus attractif comparativement à d'autres techniques comme le sciage par disque diamanté.

La précision des pièces à scier , très importante pour applications électroniques, dépend de la position des fils au cours du sciage, ainsi que des éléments de support de la pièce à scier, donc de la position des cylindres guide-fils par rapport à la pièce à scier. Cette position sera fonction de la température de la zone de sciage proprement dite, ainsi que des éléments qui y sont rattachés, tels que les cylindres guide-fils, les éléments de support du lingot, à savoir la table, le guide linéaire, etc.

Cette technique de sciage requiert donc un contrôle parfait de la position des cylindres guide-fils par rapport à la pièce à scier et réciproquement. En effet, un mouvement même lent résultera en ondulations ou voilage de la surface des tranches à scier.

Les exigences des applications à usage semi-conducteur, liées aux dimension grandissantes des lingots donc des tranches, nécessitent que même de petites variations doivent être évitées. Il ne suffira donc pus de contrôler seulement la température d'un éventuel liquide de refroidissement, mais en plus de minimiser l'effet de la température sur le positionnement de la pièce à scier. De plus, les roulements supportant les guide-fils fortement chargés génèrent de la chaleur qui, additionnée à l'énergie produite au cours du sciage en diffusant dans les parties avoisinantes, contribue à l'imprécision de la découpe. Il faudra donc, pour minimiser cet effet, utiliser un concept de construction intégrée le plus symétrique possible (pour limiter les mouvements erratiques), le plus compact possible (pour limiter les influences extérieures et confiner le plus possible les effets pervers), et dont la forme imposera les directions des mouvements élastiques et thermiques et qui aura pour effet de rigidifier l'ensemble tout en lui conférant des propriétés de contrôle passif des effets thermiques. Les constructions actuelles utilisent en général pour la zone de sciage une structure en porte-à-faux ou en col de cygne, ou négligent tout simplement les effets thermiques et élastiques par une construction plus guidée par la facilité de réalisation que par souci d'optimalisation.

Le but de l'invention consiste donc à remédier aux inconvénients précités en fournissant un dispositif de sciage qui, de par le concept intégré de sa zone de sciage, permet de contrôler passivement, en annihilant les effets thermiques et élastiques, la précision des pièces à scier et d'accepter ainsi des variations de températures plus grandes sans que cela soit au détriment de la qualité des pièces produites.

Le but précité est obtenu par le dispositif de sciage, objet de la présente invention, qui présente les caractéristiques telles que définies dans la revendication 1.

Le dispositif de sciage selon l'invention comprend donc au moins deux parties, a savoir un ensemble destiné à la gestion du fil et une zone de sciage avec ou non un système de contrôle de la température de ladite zone. La construction de la zone de sciage est faite de telle manière que l'ensemble ait une symétrie parfaite par rapport à la direction de sciage et que les déformations élastiques ou thermiques se fassent dans un plan parallèle à la direction de sciage. On pourra améliorer les performances par l'utilisation dans sa construction d'un matériau ayant un faible coefficient de dilatation (K<5*10-6). De plus, l'ensemble peut être thermiquement contrôlé par une circulation interne d'un fluide de climatisation.

L'ensemble se présente donc sous la forme d'un caisson monobloc contenant la zone de sciage avec des ouvertures permettant l'accès a la nappe de fils, à la table-support, à la pièce à scier et aux cylindres guide-fils. Les ouvertures définissent quatre colonnes dont l'orientation doit impérativement se trouver dans la direction de sciage, les effets principaux de dilatation thermique se retrouvent dans les colonnes et doivent voir leur influence annihilée. La table-support et son mécanisme sont placés au-dessus de la nappe et centrés par rapport à celle-ci toujours avec le souci d'éliminer des effets pervers de dissymétrie et d'effort non centrés. Le déplacement se fait de haut en bas parallèlement aux colonnes. L'ensemble du caisson , colonnes comprises, peut être évidé pour permettre la circulation d'un fluide de climatisation.

L'utilisation de ce type de géométrie permet donc de réaliser une machine peu sensible aux variations de température, peu sensible aux effort de sciage, et qui peut ainsi ne requérir qu'un contrôle simplifié de son environnement.

Les effets élastiques de ce type de géométrie symétrique sur les pièces à scier sont environ 10 fois plus faibles que ceux obtenus avec une structure en porte-à-faux ou en col de cygne. Grâce à la direction imposée dans le plan de sciage des allongements thermiques, la perte de précision pour un même écart de température sera également plus faible dans la même proportion. Les dessins annexés illustrent schématiquement et à titre d'exemple le dispositif en accord avec l'invention.
La figure 1 est une vue schématique en perspective d'une forme d'exécution du dispositif de sciage selon l'invention et la figure 2 en est une vue en coupe verticale.
La figure 3 est une vue en coupe partielle de la même réalisation que celle des figures 1 et 2, illustrant les deux positions extrêmes de la pièce à scier, et présentant également une coupe horizontale selon la ligne AA.

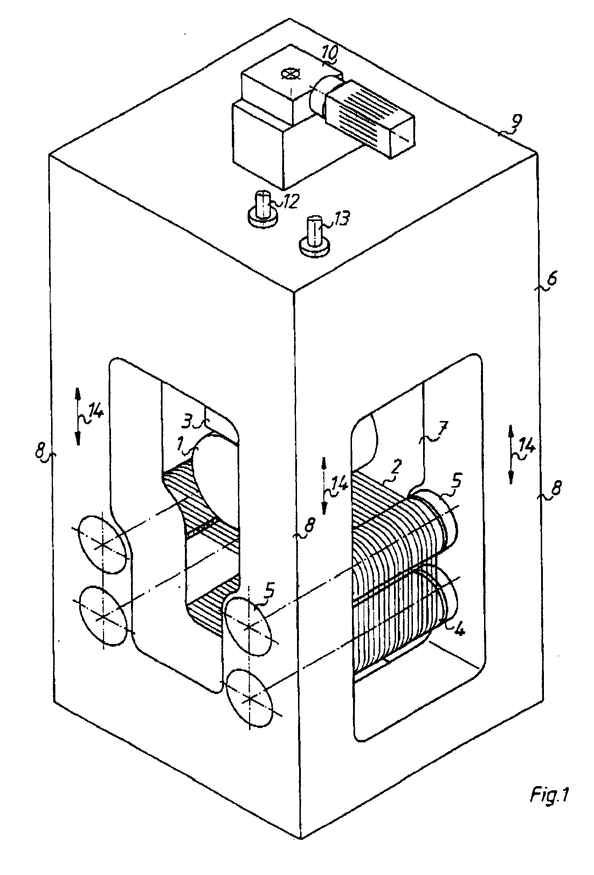

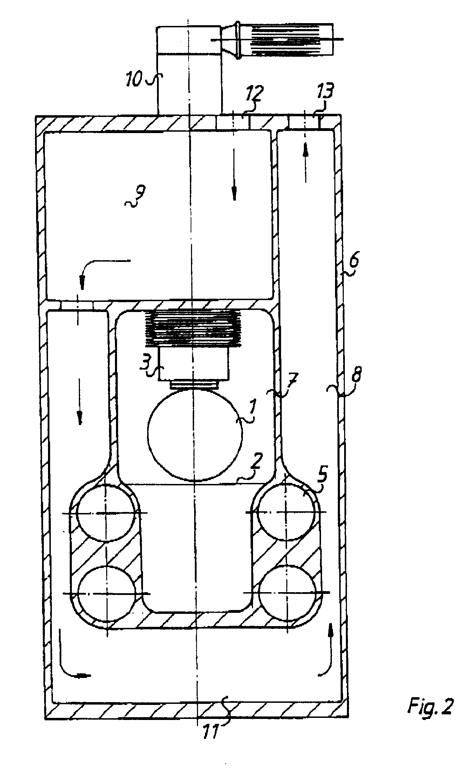

Comme illustré sur les figures 1 et 2, la pièce à scier 1 est mise en appui contre la nappe de fils 2 par la table-support 3. La table-support 3 ainsi que les cylindres guide-fils 4 supportés à leurs extrémités par des paliers 5 sont intégrés dans un bâti ayant une structure en caisson 6. Quatre ouvertures d'accès 7 forment quatre colonnes 8. A l'intérieur de la partie supérieure 9 se trouve le mécanisme du déplacement de la table 10 centré au-dessus de la nappe de fils 2.

La coupe de la figure 2 au niveau des colonnes 8 montre que celles-ci sont creuses, de même que les parties supérieure 9 et inférieure 11 du caisson, et peuvent comporter un circuit de thermostatisation ou de climatisation. Un contrôle possible de la température est réalisé par la circulation d'un fluide entre l'entrée 12 et la sortie 13.

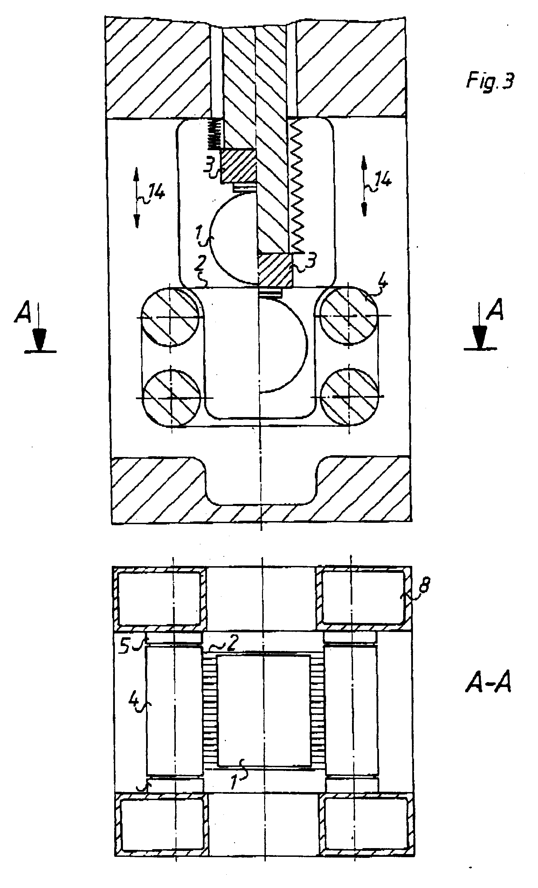

Sur la figure 3, on constate que les quatre colonnes 8 supportent de manière égale les efforts de coupe imposés par la mise en appui de la pièce à scier 1 contre la nappe de fils 2. Les déformations élastiques et thermiques 14 sont dans la même direction que celle du sciage et voient leurs effets annihilés.

Le fil de sciage formant la nappe de fils 2 entre les cylindre guide-fils 4 est en un acier à ressort d'un diamètre compris entre 0,1 et 0,2 mm, afin de scier des blocs de matériaux durs ou exotiques (tels que silicium, céramique, composés III-V, GGG, saphir, etc.) en tranches de 0,1 à 5 mm d'épaisseur environ. L'agent abrasif utilisé est un produit du commerce, et peut être du diamant, du carbure de silicium, de l'alumine, etc, et sous forme fixée au fil ou sous forme libre en barbotine.

Le dispositif de sciage permet donc par son concept géométrique intégré en forme de caisson d'obtenir une rigidité maximum et de contrôler passivement en annihilant les effets thermiques la précision des pièces à scier et d'accepter ainsi des variations de température plus grandes sans que cela soit au détriment de la qualité des pièces produites.

Selon une variante non illustrée, le bâti dans lequel est intégré le dispositif de sciage par fil peut comporter des ouvertures supplémentaires par rapport aux quatre ouvertures illustrées sur les dessins annexés. De plus, selon d'autres variantes également non illustrées, la table-support et son mécanisme d'entraînement peut être située au-dessous de la nappe de fils, et le dispositif de sciage peut comporter deux nappes de fils respectivement supérieure et inférieure, chacune coopérant avec une table-support, et permettant la découpe simultanée de deux pièces à scier.

Naturellement d'autres types de géométrie peuvent être envisagés qui, par leur forme, ont également un contrôle passif des déplacements thermiques ou élastiques ou par la combinaison de leur coefficient de dilatation propre qui, par addition ou soustraction de leurs effet, donnent des résultats similaires. Quant à la régulation de température elle-même, une circulation d'un fluide maintenu à une température constante peut suffire. Suivant les cas, et si la zone de sciage a une température relativement constante par le fait d'un travail requérant peu d'énergie, une régulation par une circulation externe peut s'avérer inutile, le contrôle passif de la structure étant suffisant.

## Revendications

1. Dispositif de sciage par fil comprenant une nappe de fils (2) susceptible de se déplacer selon un mouvement alternatif ou continu en appui contre une pièce à scier (1) fixée sur une table-support (3), caractérisé en ce qu'il est intégré dans un bâti (6) constitué d'une structure en forme de caisson monobloc présentant quatre ouvertures d'accès (7) symétriquement disposées et formant quatre colonnes (8), ces colonnes étant réparties autour de la zone de sciage et ayant leur axe parallèle à la direction de sciage, et en ce que la table-support (3) est située à la verticale de la nappe de fils (2) et se déplace parallèlement auxdites colonnes (8).

2. Dispositif selon la revendication 1, caractérisé en ce que le bâti 6 est en un matériau à faible coefficient de dilatation.

3. Dispositif selon la revendication 1 ou la revendication 2, caractérisé en ce que le bâti (6) comporte un circuit interne d'un fluide thermostatisé.

4. Dispositif selon l'une des revendications 1 à 3, caractérisé en ce que le bâti (6) comporte des ouvertures supplémentaires.

5. Dispositif selon l'une des revendications 1 à 4, caractérisé en ce que la table-support (3) coopère avec un mécanisme d'entraînement (10), cette table-support avec son mécanisme d'entraînement étant situés au-dessus ou au-dessous de la nappe de fils (2).

6. Dispositif selon l'une des revendications 1 à 5, caractérisé en ce qu'il comporte deux nappes de fils respectivement supérieure et inférieure, coopérant chacune avec une table-support, et permettant la découpe simultanée de deux pièces à scier (1).

## Claims

1. A wire-sawing device including a web of wires (2) capable of a continuous motion or an alternating motion while being pressed against a sawed piece (1) fastened to a support table (3), characterised in that it is integrated into a frame (6) comprised of a structure having the form of a single-bloc casing with four access openings (7) located symmetrically and forming four columns (8), these columns being placed around the sawing zone and having their axes parallel to the sawing direction, and in that the support table (3) is situated vertically above the web of wires (2) and moves in a direction parallel to said columns (8).

2. A device according to claim 1, characterised in that the frame (6) is made of a material with a low thermal expansion coefficient.

3. A device according to claim 1 or claim 2, characterised in that the frame (6) has an internal circuit for a thermostatic fluid.

4. A device according to one of claims 1 to 3, characterized in that the frame (6) has additional openings.

5. A device according to one of claims 1 to 4, characterised in that the support table (3) co-operates with a driving mechanism (10), said support table with its driving mechanism being situated above or beneath the web of wires (2).

6. A device according to one of claims 1 to 5, characterised in that it has two webs of wires, respectively an upper one and a lower one, each one co-operating with a support table to allow the simultaneous cutting of two pieces (1).

## Patentansprüche

1. Drahtsägevorrichtung mit einer Schicht von Drähten (2), die dazu belfähigt ist, sich hin- und hergehend oder kontinuierlich zu bewegen, während sie gegen ein zu sägendes Werkstück (1) drückt, das auf einem Auflagetisch (3) befestigt ist, dadurch gekennzeichnet, dass sie in ein Maschinengestell (6) integriert ist, das aus einem Aufbau in Gestalt eines Monoblockkastens besteht, der vier symmetrisch angeordnete Zugangsöffnungen (7) aufweist und vier Säulen (8) bildet, wobei diese Säulen um die Sägezone herum verteilt sind und ihre Achsen parallel zur Sägerichtung haben, und dadurch, dass sich der Auflagetisch (3) in der Senkrechten zur Drahtschicht (2) befindet und parallel zu den benannten Säulen (8) bewegt.

2. Vorrichtung nach Anspruch 1, dadurch gekennzeichnet, dass das Maschinengestell (6) aus einem Material mit geringem Ausdehnungskoeffizienten besteht.

3. Vorrichtung nach Anspruch 1 oder Anspruch 2, dadurch gekennzeichnet, dass das Maschinengestell (6) im Inneren einen thermostatisierten Fluidkreislauf umfasst.

4. Vorrichtung nach einem der Ansprüche 1 bis 3, dadurch gekennzeichnet, dass das Maschinengestell (6) zusätzliche Öffnungen umfasst.

5. Vorrichtung nach einem der Ansprüche 1 bis 4, dadurch gekennzeichnet, dass der Auflagetisch (3) mit einem Antriebsmechanismus (10) zusammenwirkt, wobei dieser Auflagetisch mit seinem Antriebsmechanismus über oder unter der Drahtschicht (2) angeordnet ist.

6. Vorrichtung nach einem der Ansprüche 1 bis 5, dadurch gekennzeichnet, dass sie zwei Drahtschichten umfasst, eine obere und eine untere, jede mit einem Auflagetisch zusammenwirkend und den gleichzeitigen Schnitt zweier zu sägender Werkstücke (1) gestattend.
